# EUROPEAN PATENT APPLICATION

(11) **EP 4 776 509 A1**
(43) Date of publication of application: **15.07.2026**
(21) Application number: 24861551.0
(22) Date of filing: 20.05.2024
(51) Int. Cl.: H02S 20/32, F24S 30/425, F24S 50/20

(54) **SUPPORTING STRUCTURE AND PHOTOVOLTAIC TRACKING MOUNTING**

(30) Priority: 07.09.2023 CN 202311156159
(71) Applicant: Mokun Renewable Technology Co., Ltd., Shanghai 201400 (CN)
(72) Inventor: GUO, Jiabao, Shanghai 201400 (CN); LIU, Xiao, Shanghai 201400 (CN)
(74) Representative: Lapienis, Juozas
(86) International application number: PCT/CN2024/094254
(87) International publication number: WO 2025/050703

(57) **Abstract**

Embodiments of the present disclosure relate to the technical field of photovoltaic power generation, and provide a supporting structure and a photovoltaic tracking mounting. The supporting structure comprises a bearing housing, an arc bearing, a first roller, and a second roller, wherein the first roller is rotatably connected to the bearing housing, the second roller is rotatably connected to the bearing housing, the arc bearing is configured to support a main beam of a photovoltaic tracking mounting, the first roller is configured to roll and abut against the arc-shaped outer side wall of the arc bearing, and the second roller is configured to roll and abut against the arc-shaped inner side wall of the arc bearing, so that the arc bearing rotates relative to the bearing housing. The supporting structure can maintain normal movement of the main beam along a set movement trajectory, ensuring that the photovoltaic tracking mounting operates normally to track the change of the solar azimuth angle.

## Description

### CROSS-REFERENCE TO RELATED APPLICATION

The present invention claims priority to Chinese Patent Application No. 2023111561598, filed with the China National Intellectual Property Administration on September 7, 2023, and entitled "SUPPORT STRUCTURE AND PHOTOVOLTAIC TRACKING SUPPORT", which is incorporated herein by reference in its entirety.

### TECHNICAL FIELD

The present invention relates to the technical field of photovoltaic power generation, and in particular, to a support structure and a photovoltaic tracking support.

### BACKGROUND ART

In a photovoltaic power generation system, the flat single-axis tracking support is one of the commonly used forms of photovoltaic array support. As the support is capable of operating by tracking the azimuth changes of the sun in the day, the total annual power generated by photovoltaic modules that use a flat single-axis tracking support is 15%-25% higher than that by photovoltaic modules that use an optimal fixed tilt angle support. Due to the need to rotate about the axis, a main beam typically needs to be disposed in the middle of such flat single-axis tracking supports to support the photovoltaic module. The photovoltaic module is mounted above the main beam and rotates around the main beam, with the center thereof as the axis.

However, for such structures, during strong winds, the rotating portion of the tracking support generates an upward or downward deflection trend, making it impossible to maintain the normal motion of the main beam on the set motion trajectory, affecting the operation of the tracking support in tracking the azimuth changes of the sun.

### SUMMARY

The present invention provides a support structure and a photovoltaic tracking support that are capable of maintaining the normal motion of the main beam on the set motion trajectory to ensure the normal operation of the photovoltaic tracking support in tracking azimuth changes of the sun.

Embodiments of the present invention can be implemented as follows.

According to a first aspect, the present invention provides a support structure, which includes:
a bearing base;
a first roller, where the first roller is rotatably connected to the bearing base;
a second roller, where the second roller is rotatably connected to the bearing base; and
an arc bearing, where the arc bearing is configured to support a main beam of a photovoltaic tracking support, the first roller is configured to roll and abut an arcuate outer sidewall of the arc bearing, and the second roller is configured to roll and abut an arcuate inner sidewall of the arc bearing, so that the arc bearing rotates relative to the bearing base.

In an optional embodiment, the arc bearing includes a support plate and an arc plate, the arc plate has the arcuate inner sidewall and the arcuate outer sidewall, the support plate is connected to the arcuate inner sidewall, and the support plate is configured to support the main beam of the photovoltaic tracking support.

In an optional embodiment, the support plate is provided with a limiting groove, where the limiting groove is configured to support the main beam.

In an optional embodiment, the arc plate has a semi-circular arc shape.

In an optional embodiment, the support plate is provided with a limiting groove, where the limiting groove is configured to support the main beam.

In an optional embodiment, a portion of the wall of the arcuate outer sidewall is recessed toward the arcuate inner sidewall to form and provide a roller guide groove, and the first roller is configured to roll and abut the roller guide groove.

In an optional embodiment, the roller guide groove extends along a peripheral edge of the arc plate.

In an optional embodiment, the axis of rotation of the first roller is parallel to the axis of rotation of the second roller.

In an optional embodiment, the axis of rotation of the first roller is parallel to the axis of rotation of the arc bearing.

In an optional embodiment, a plurality of roller guide grooves and a plurality of first rollers are provided, the plurality of roller guide grooves are distributed in parallel, and at least one of the first rollers is configured to roll and abut one of the roller guide grooves.

In an optional embodiment, the bearing base includes a connecting plate, a first plate body, a second plate body, and a through shaft, the first plate body and the second plate body are disposed at intervals on the connecting plate, and the through shaft passes through the first plate body and the second plate body simultaneously, where
the plurality of first rollers rotate about the same through shaft.

In an optional embodiment, the bearing base further includes a cantilever shaft, and the cantilever shaft is connected to the first plate body, and the second roller is rotatably connected to the cantilever shaft.

In an optional embodiment, the support structure further includes a limiting member, the limiting member is connected to the arc bearing, and the limiting member is configured to abut the second roller when the arc bearing is rotated to an extreme position.

In an optional embodiment, the axis of rotation of the first roller is parallel to the axis of rotation of the second roller.

In an optional embodiment, the support structure includes a plurality of sets of roller groups, and the plurality of sets of roller groups are respectively located at a plurality of support positions distributed at intervals on the arc bearing, where
a plurality of first rollers and a plurality of second rollers are provided, and a first roller and a second roller located at the same support position of the arc bearing constitute one roller group.

In an optional embodiment, the support structure includes two sets of roller groups.

In an optional embodiment, each set of roller groups includes two first rollers, and the two first rollers share an axis of rotation; and each set of roller groups further includes two second rollers, and the two second rollers are located on opposite sides of the support plate, respectively.

In an optional embodiment, one roller guide groove is provided, and one set of roller groups only includes one first roller and two second rollers.

In an optional embodiment, a length of the support plate in a direction of the axis of rotation of the arc bearing is less than a length of the arc plate in the direction of the axis of rotation of the arc bearing, and edges of the arc plate protrude toward two sides of the support plate.

According to a second aspect, the present invention provides a photovoltaic tracking support, which includes a main beam and the support structure as described in any one of the preceding embodiments, where the arc bearings of the plurality of support structures are mounted at intervals along a length direction of the main beam.

In an optional embodiment, a center point of the arc bearing is disposed between an upper end face or a highest point of the main beam and a center of the main beam, and the center point of the arc bearing is located on a centerline in a vertical direction of the main beam.

In an optional embodiment, the photovoltaic tracking support is a flat single-axis tracking support.

The support structure and photovoltaic tracking support according to embodiments of the present invention have the following beneficial effects.

The present invention provides a support structure, where the support structure includes a bearing base, an arc bearing, a first roller and a second roller, the first roller is rotatably connected to the bearing base, the second roller is rotatably connected to the bearing base, the arc bearing is configured to support a main beam of the photovoltaic tracking support, the first roller is configured to roll and abut an arcuate outer sidewall of the arc bearing, and the second roller is configured to roll and abut an arcuate inner sidewall of the arc bearing, so that the arc bearing rotates relative to the bearing base. Since both the first roller and the second roller are capable of limiting the motion of the bearing base, typically under gravity, the photovoltaic tracking support is supported on the first roller at the arcuate outer sidewall of the bearing base through the arc bearing. During strong winds, the rotating portion of the photovoltaic tracking support generates an upward or downward deflection trend. In this case, the arc bearing is abutted and limited by the second roller at the arcuate inner sidewall, which prevents upward deflection, or the arc bearing is abutted and limited by the first roller at the arcuate outer sidewall, which prevents downward deflection, such that the photovoltaic tracking support is always on the set motion trajectory, thereby maintaining the normal motion of the main beam on the set motion trajectory and ensuring the normal operation of the photovoltaic tracking support in tracking azimuth changes of the sun.

The present invention provides a photovoltaic tracking support, where the photovoltaic tracking support includes a main beam and the support structure described above. The arc bearings of the plurality of support structures are mounted at intervals along the length direction of the main beam, and the photovoltaic tracking support has all the functions of the support structure described above.

### BRIEF DESCRIPTION OF DRAWINGS

To more clearly explain the technical solutions of the embodiments of the present invention, the accompanying drawings required in the embodiments will be briefly introduced below. It should be understood that the following accompanying drawings only show some embodiments of the present invention, and therefore should not be regarded as limiting the scope. For those of ordinary skill in the art, other related accompanying drawings can also be obtained from these accompanying drawings without inventive efforts.
FIG. 1 is a schematic diagram of a photovoltaic tracking support according to an embodiment of the present invention;
FIG. 2 is a side view of a support structure according to an embodiment of the present invention;
FIG. 3 is a schematic diagram of an arc plate according to an embodiment of the present invention;
FIG. 4 is a schematic diagram of a support structure according to other embodiments of the present invention;
FIG. 5 is a schematic diagram of a first roller according to an embodiment of the present invention;
FIG. 6 is a schematic diagram of a press plate according to an embodiment of the present invention;
FIG. 7 is a schematic diagram of a bearing base according to an embodiment of the present invention;
FIG. 8 is a schematic diagram of a bearing base according to an embodiment of the present invention after detaching a through shaft and a cantilever shaft;
FIG. 9 is a schematic diagram of a cantilever shaft according to an embodiment of the present invention;
FIG. 10 is a schematic diagram of a through shaft according to an embodiment of the present invention;
FIG. 11 is a schematic diagram of a main beam according to an embodiment of the present invention with a rectangular cross-section;
FIG. 12 is a schematic diagram of a main beam according to an embodiment of the present invention with a circular cross-section; and
FIG. 13 is a schematic diagram of a main beam according to an embodiment of the present invention with a hexagonal cross-section.

Reference numerals: 1000-support structure; 100-bearing base; 110-connecting plate; 120-first plate body; 130-second plate body; 140-through shaft; 150-cantilever shaft; 200-arc bearing; 201-center point; 210-support plate; 211-limiting groove; 220-arc plate; 221-arcuate outer sidewall; 222-arcuate inner sidewall; 223 roller guide groove; 300-first roller; 400-second roller; 500-limiting member; 600-press plate; 2000-main beam; 2001-upper end face; 2002-center; 2003-highest point; and 2010-centerline.

### DETAILED DESCRIPTION OF EMBODIMENTS

To make the object, technical solutions and advantages of the embodiments of the present invention clearer, the technical solutions of the embodiments of the present invention will be clearly and completely described below in conjunction with the accompanying drawings of the embodiments of the present invention. Obviously, the described embodiments are part of the embodiments of the present invention and not all of the embodiments. Typically, the components of the embodiments of the present invention described and shown in the accompanying drawings herein can be arranged and designed in various different configurations.

Thus, the following detailed description of the embodiments of the present invention provided in the accompanying drawings is not intended to limit the scope of the claimed present invention, but merely to represent the selected embodiments of the present invention. Based on the embodiments in the present invention, all other embodiments obtained by those skilled in the art without inventive efforts fall within the scope of protection of the present invention.

It should be noted that similar reference numerals and letters indicate similar items in the following drawings, and therefore, once an item is defined in one of the drawings, no further definition or explanation is required in the following drawings.

In the description of the present invention, it should be noted that terms such as "upper", "lower", "inner", "outer", or the like indicate positional or orientational relationships based on the orientations or positions shown in the drawings, or based on the orientations or positions customarily used when the product of the present invention is placed during use. These terms are provided merely for facilitating the description of the present invention and simplifying the description, and are not intended to indicate or imply that the referenced devices or components must have specific orientations, or must be constructed or operated in specific orientations, and therefore these terms should not be construed as limiting the present invention.

In addition, the terms "first", "second", and the like are merely intended for differentiated description, and should not be construed as an indication or an implication of relative importance.

It should be noted that features in embodiments of the present invention can be mutually combined in the case of no conflict.

As mentioned in the background art, in a photovoltaic power generation system, the flat single-axis tracking support is one of the commonly used forms of photovoltaic array support. As the support is capable of operating by tracking the azimuth changes of the sun in the day, the total annual power generated by photovoltaic modules that use a flat single-axis tracking support is 15%-25% higher than that by photovoltaic modules that use an optimal fixed tilt angle support. Due to the need to rotate about the axis, a main beam typically needs to be disposed in the middle of such flat single-axis tracking supports to support the photovoltaic module. The photovoltaic module is mounted above the main beam and rotates around the main beam, with the center thereof as the axis.

However, for such structures, during strong winds, the rotating portion of the tracking support generates an upward or downward deflection trend, making it impossible to maintain the normal motion of the main beam on the set motion trajectory.

In addition, due to the relatively long main beam in the north-south direction and the relatively small torsional rigidity of such structures, it is very prone to generating torsional resonance under the action of strong winds, which in turn causes devastating damage to the tracking support.

To this end, oscillation damping rods are often mounted in prior art to mitigate oscillations caused by strong winds. However, this measure is not ideal in actual applications, particularly when the transverse dimensions of the components mounted on the main beam are large, and using this measure alone will still cause the tracking support to be damaged.

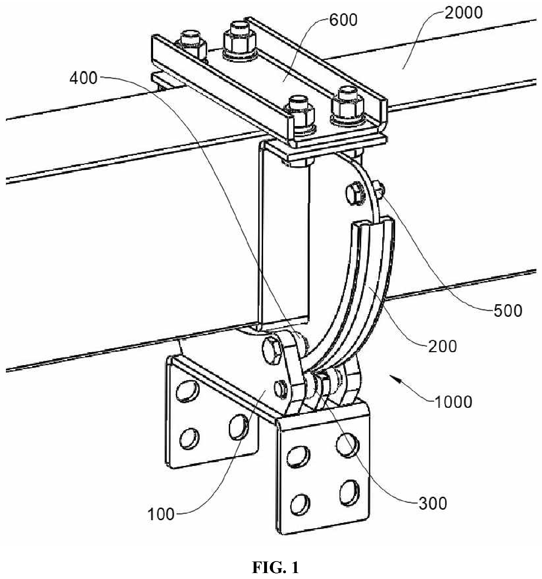

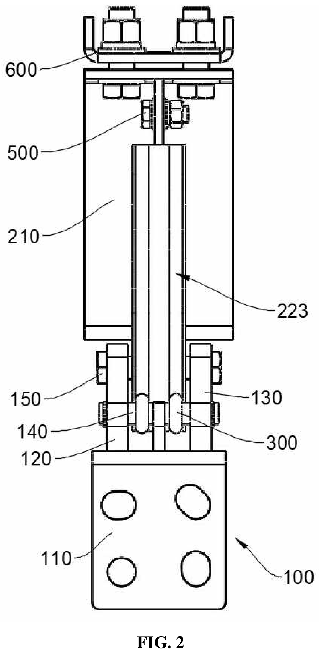

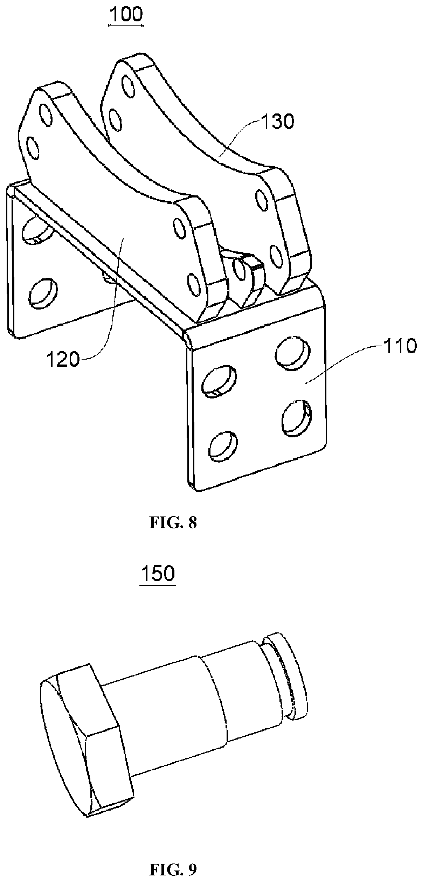

In view of this, referring to FIGS. 1-13, the support structure 1000 and the photovoltaic tracking support provided by the embodiments of the present invention are capable of solving this problem, which will be described in detail below.

Referring to FIGS. 1-3, the present invention provides a photovoltaic tracking support. The photovoltaic tracking support includes a main beam 2000 and a support structure 1000. The arc bearings 200 (detailed below) of the plurality of support structures 1000 are mounted at intervals along the length direction of the main beam 2000. The support structure 1000 can allow the photovoltaic tracking support to maintain the normal motion of the main beam 2000 on the set motion trajectory to ensure the normal operation of the photovoltaic tracking support in tracking azimuth changes of the sun.

It should be noted that, in this embodiment, the photovoltaic tracking support is a flat single-axis tracking support.

Specifically, the support structure 1000 includes a bearing base 100, an arc bearing 200, a first roller 300, and a second roller 400, the first roller 300 is rotatably connected to the bearing base 100, the second roller 400 is rotatably connected to the bearing base 100, the arc bearing 200 is configured to support the main beam 2000 of the photovoltaic tracking support, the first roller 300 is configured to roll and abut an arcuate outer sidewall 221 of the arc bearing 200, and the second roller 400 is configured to roll and abut an arcuate inner sidewall 222 of the arc bearing 200, so that the arc bearing 200 rotates relative to the bearing base 100.

Since both the first roller 300 and the second roller 400 are capable of limiting the motion of the bearing base 100, typically under gravity, the photovoltaic tracking support is supported on the first roller 300 at the arcuate outer sidewall 221 of the bearing base 100 through the arc bearing 200. During strong winds, the rotating portion of the photovoltaic tracking support generates an upward or downward deflection trend. In this case, the arc bearing 200 is abutted and limited by the second roller 400 at the arcuate inner sidewall 222, which prevents upward deflection, or the arc bearing 200 is abutted and limited by the first roller 300 at the arcuate outer sidewall 221, which prevents downward deflection, such that the photovoltaic tracking support is always on the set motion trajectory. In other words, the bearing base 100 always rotates on the set motion trajectory, thereby maintaining the normal motion of the main beam 2000 on the set motion trajectory and ensuring the normal operation of the photovoltaic tracking support in tracking azimuth changes of the sun.

It should be noted that the arc bearing 200 includes a support plate 210 and an arc plate 220, the arc plate 220 has the arcuate inner sidewall 222 and the arcuate outer sidewall 221, the arc plate 220 has a semi-circular arc shape, the support plate 210 is connected to the arcuate inner sidewall 222, and the support plate 210 is configured to support the main beam 2000 of the photovoltaic tracking support.

A portion of the wall of the arcuate outer sidewall 221 is recessed toward the arcuate inner sidewall 222 to form and provide a roller guide groove 223, and the first roller 300 is configured to roll and abut the roller guide groove 223. Meanwhile, the roller guide groove 223 also has a semi-circular arc shape, that is, the roller guide groove 223 extends along a peripheral edge of the arc plate 220.

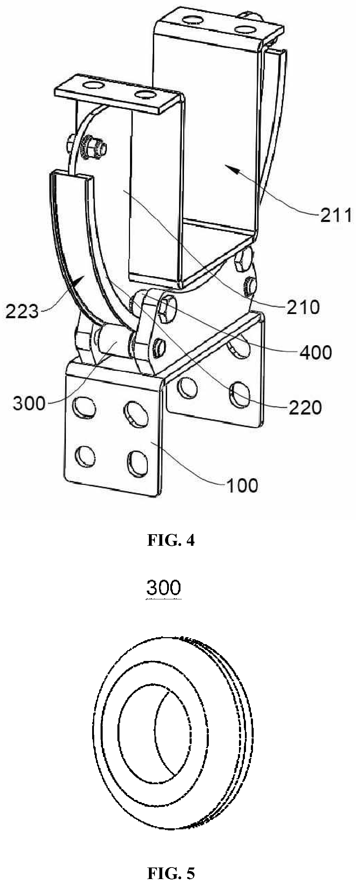

The roller guide groove 223 can guide the rolling of the first roller 300 (shown in FIG. 5). Meanwhile, the roller guide groove 223 further limits the movement of the arc bearing 200 in the axial direction by limiting the first roller 300.

The second roller 400 can have the same structure as the first roller 300, and the specific structure of the second roller 400 can refer to the structure of the first roller 300.

It is easily understood that in this embodiment, the axis of rotation of the first roller 300 is parallel to the axis of rotation of the second roller 400, and meanwhile, the axis of rotation of the first roller 300 is parallel to the axis of rotation of the arc bearing 200.

To prevent the first roller 300 and the second roller 400 from sliding out of the arc bearing 200, the support structure 1000 further includes a limiting member 500, where the limiting member 500 can be a bolt. The limiting member 500 is connected to the support plate 210 of the arc bearing 200, and the limiting member 500 is configured to abut the second roller 400 when the arc bearing 200 rotates to an extreme position.

Two limiting members 500 are provided, and two round holes are opened on the support plate 210 to facilitate the installation of bolts, that is, two extreme positions are provided. The extreme positions can be understood herein as the maximum angle of deflection of the arc bearing 200 in the east-west direction. Where there is no deflection, it should be understood that the rotating portion of the photovoltaic tracking support is at a rotation angle of 0°, which is a wind-protected condition in this case.

It should be noted herein that the rotating portion of the photovoltaic tracking support should be understood as a structure that deflects in the east-west direction with the arc bearing 200.

It should be noted that a plurality of roller guide grooves 223 and a plurality of first rollers 300 are provided, the plurality of roller guide grooves 223 are distributed in parallel, and at least one of the first rollers 300 is configured to roll and abut one of the roller guide grooves 223. It should be noted that in this embodiment, plurality can be understood as at least two.

In this embodiment, two roller guide grooves 223 are provided, and the two roller guide grooves 223 are distributed in parallel. Specifically, two first rollers 300 are configured to roll and abut the same roller guide groove 223.

Of course, in other embodiments, three roller guide grooves 223 can also be provided, and the three first rollers 300 are configured to roll and abut the same roller guide groove 223.

To avoid resonance, referring to FIG 1 again, the support structure 1000 includes a plurality of sets of roller groups, and the plurality of sets of roller groups are respectively located at a plurality of support positions distributed at intervals on the arc bearing 200, where a plurality of first rollers 300 and a plurality of second rollers 400 are provided, and a first roller 300 and a second roller 400 located at the same support position of the arc bearing 200 constitute one roller group.

In this embodiment, the support structure 1000 includes two sets of roller groups, and the two sets of roller groups are respectively located at two support positions distributed at intervals on the arc bearing 200; and a first roller 300 and a second roller 400 located at the same support position of the arc bearing 200 constitute one roller group.

Each set of roller groups includes two first rollers 300, and the two first rollers 300 share an axis of rotation; and each set of roller groups further includes two second rollers 400, and the two second rollers 400 are located on opposite sides of the support plate 210, respectively.

In this way, two pairs of rollers corresponding to an inner side and an outer side of the bearing base 100 form two fulcrums for the arc bearing 200, and a spacing between these two fulcrums is relatively wide. Therefore, the vertical line of gravity of the rotating portion of the photovoltaic tracking support is always between the two fulcrums within a certain range of rotation angle.

This allows the rotating portion of the photovoltaic tracking support to not generate additional eccentric torque due to shaking from strong winds when the rotation angle is 0° under a wind-protected condition.

Meanwhile, under normal operating conditions, a driver can transmit the rotation force along the center of the main beam 2000 through the main beam 2000, and drive the main beam 2000 and the arc bearing 200 to slowly rotate on the bearing base 100. However, due to the uncertainty of the vector direction of force, the component of the wind force that can rotate the main beam 2000 is relatively small, and this two-point supporting structure often forms a tilting force centered at a certain point thereof, making it difficult to form a regular oscillating torque. Therefore, this configuration can effectively inhibit the oscillation of the rotating portion of the tracking support, the resonance is not generated, and the damage to the photovoltaic tracking support is avoided.

In addition, it should be noted that three, four, or five roller groups can be provided. The more the roller groups are, the more the support points are, and the smoother the rotation of the arc bearing 200 is.

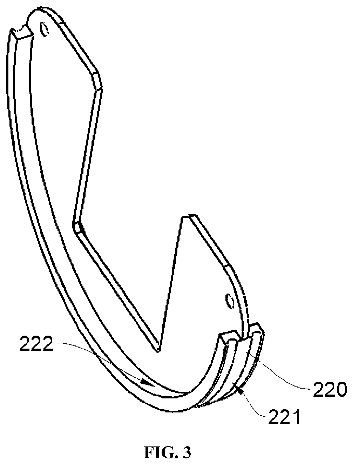

It should be noted that in this embodiment, as shown in FIG. 3, since the length of the support plate 210 in the direction of the axis of rotation of the arc bearing 200 is less than the length of the arc plate 220 in the direction of the axis of rotation of the arc bearing 200, the thickness of the support plate 210 is less than the thickness of the arc plate 220.

Accordingly, the edges of the arc plate 220 can protrude toward two sides of the support plate 210 to facilitate abutting the second rollers 400 on two sides.

In addition, in some embodiments, as shown in FIG 4, one roller guide groove 223 can also be provided. In this case, one set of roller groups only includes one first roller 300 and two second rollers 400.

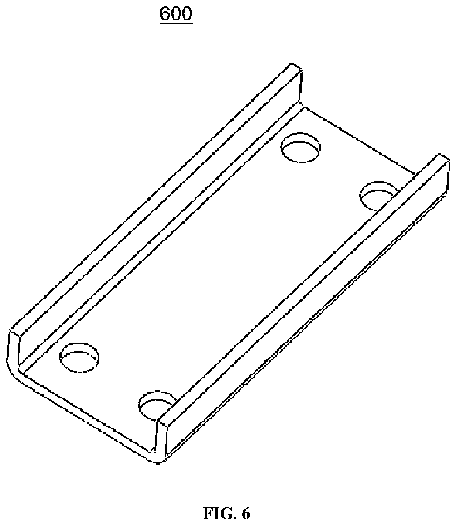

It should be noted that the support plate 210 is provided with a limiting groove 211 (shown in FIG 4), the limiting groove 211 is configured to support the main beam 2000, and the limiting groove 211 is a U-shaped groove. Meanwhile, the support structure 1000 further includes a press plate 600 (shown in FIG. 6). The press plate 600 and the support plate 210 are connected by a bolt, and the side walls of the limiting groove 211 and the press plate 600 jointly define a limiting channel. The main beam 2000 is configured to pass through the limiting channel to achieve the mounting of the main beam 2000.

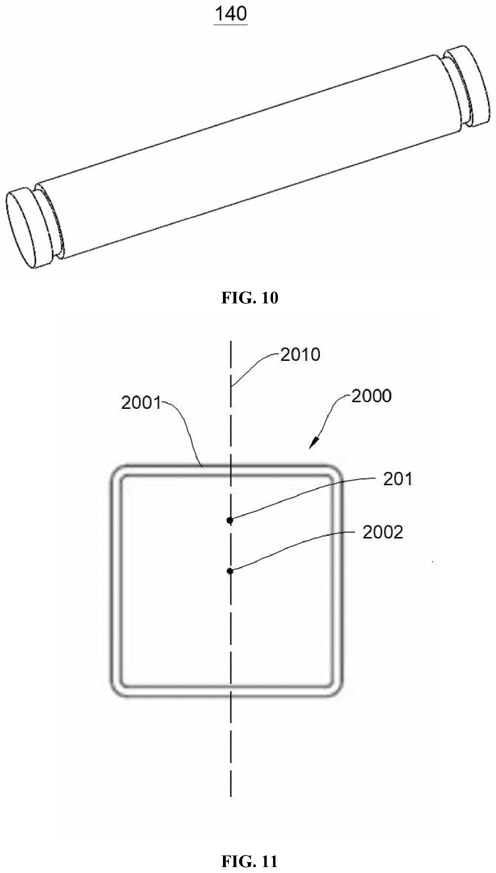

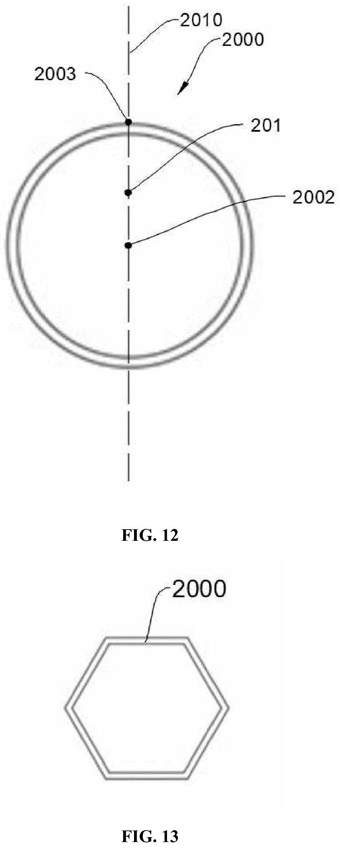

In this embodiment, the cross-section of the main beam 2000 is rectangular (shown in FIG. 11). Of course, in other embodiments, the support structure 1000 provided in this embodiment can also be applicable to main beams 2000 of other cross-sectional shapes, for example, the cross-section of the main beam 2000 can be circular (shown in FIG. 12), or the cross-section of the main beam 2000 can be polygonal, such as hexagonal (shown in FIG. 13).

The position of the bearing base 100 remains unchanged during power generation of the photovoltaic module, and the rotation of the arc bearing 200 achieves the deflection of the photovoltaic module in the east-west direction on the main beam 2000, thereby achieving the tracking of azimuth changes of the sun.

In addition, the photovoltaic tracking support provided in this embodiment is also capable of effectively reducing the eccentric torque of the rotating portion of the photovoltaic tracking support.

Specifically, the center point of the arc bearing 200 and the center of the main beam 2000 can both coincide and not coincide in design. Typically, when the center point of the arc bearing 200 coincides with the center of the main beam 2000, the transmission of the driving torque by the driver through the main beam 2000 is smoother. Meanwhile, under the action of strong winds, the transmission of oscillating torque by the main beam 2000 to the driver is also smoother, which is relatively unfavorable for inhibiting the torsional oscillation of the photovoltaic tracking support.

When the center point of the arc bearing 200 does not coincide with the center of the main beam 2000, the more favorable trend is to increase the radius of the arc bearing 200 and move the center point of the arc bearing 200 upward, which simultaneously reduces the eccentric torque of the rotating portion of the photovoltaic tracking support and is conducive to driving balance.

However, the greater the distance between the center point of the arc bearing 200 and the center of the main beam 2000 is, the less smooth the transmission of the driving torque by the driver through the main beam 2000 is, and the less smooth the transmission of the oscillating torque by the main beam 2000 to the driver under the action of strong winds is. Moreover, the impact on such unsmooth transmission is relatively small at low-speed rotation and relatively large at high-speed rotation, and increases by multiples with the increase in rotational speed.

Thus, by appropriately increasing the distance between the center point of the arc bearing 200 and the center of the main beam 2000, the torsional oscillation of the tracking support can be effectively inhibited.

However, the distance between the center point of the arc bearing 200 and the center of the main beam 2000 cannot be designed to be too large. If the distance is too large, a sticking phenomenon can occur between the arc bearing 200 and the bearing base 100 when the driving torque is transmitted by the driver, and in severe cases, the arc bearing can completely jam and cannot rotate.

Typically, the center point 201 of the arc bearing 200 is disposed between the upper end face 2001 (as shown in FIG. 11) on the main beam 2000 and the center 2002 of the main beam 2000, and the center point 201 of the arc bearing 200 is located on the centerline 2010 in the vertical direction of the main beam 2000.

The upper end face 2001 of the main beam 2000 herein can be understood to be the upper end face of the main beam 2000 when the rotation angle is 0°.

Alternatively, as shown in FIG. 12, where the cross-section of the main beam 2000 is circular, the center point 201 of the arc bearing 200 is disposed between the highest point 2003 of the main beam 2000 and the center 2002 of the main beam 2000, and the center point 201 of the arc bearing 200 is located on the centerline 2010 in the vertical direction of the main beam 2000.

The highest point 2003 of the main beam 2000 herein can be understood to be the highest point of the main beam 2000 when the rotation angle is 0°.

During the specific application, the optimal distance between the center point 201 of the arc bearing 200 and the center 2002 of the main beam 2000 can be determined by testing.

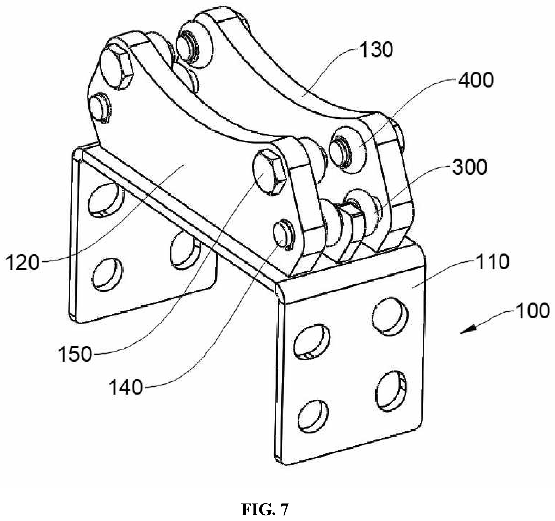

In addition, it should be noted that, referring to FIGS. 7-10, in this embodiment, the bearing base 100 includes a connecting plate 110, a first plate body 120, a second plate body 130, a through shaft 140, and a cantilever shaft 150. The first plate body 120 and the second plate body 130 are disposed at intervals on the connecting plate 110, and the through shaft 140 passes through the first plate body 120 and the second plate body 130 simultaneously, where the plurality of first rollers 300 rotate about the same through shaft 140.

The connecting plate 110 is configured to connect to the upper end of the column (not shown in the figure), and the lower end of the column is connected to the pile foundation to achieve support for the photovoltaic module.

A plurality of cantilever shafts 150 are provided. Specifically, four cantilever shafts 150 are provided, where two cantilever shafts 150 are connected to the first plate body 120, the other two cantilever shafts 150 are connected to the second plate body 130, and each second roller 400 is rotatably connected to each cantilever shaft 150.

Specifically, in one roller group, two first rollers 300 can rotate about the same through shaft 140, and two second rollers 400 are respectively rotatably connected to two cantilever shafts 150. The length of the cantilever shaft 150 is less than the length of the through shaft 140.

Specifically, the end of the cantilever shaft 150 is provided with a retaining ring to prevent the second roller 400 from sliding out axially, and the retaining ring is provided at two ends of the through shaft 140 to limit the first roller 300 from sliding in the axial direction of the through shaft 140.

In addition, it should be noted that when the support structure 1000 is mounted, as shown in FIG. 1, the arc bearing 200 is first firmly mounted below the main beam 2000 with the press plate 600 and bolts; then as shown in FIG. 7, the through shafts 140, the cantilever shafts 150 and the rollers are mounted on the bearing base 100, with the second rollers 400 mounted on the cantilever shafts 150, and the first rollers 300 mounted on the through shafts 140; and the arc bearing 200 is introduced between the first roller 300 and the second roller 400, and entrances at two ends of the arc bearing 200 are locked by a limiting member 500 to prevent the arc bearing 200 from sliding out of the bearing base 100.

In summary, the support structure 1000 includes a bearing base 100, an arc bearing 200, a first roller 300, and a second roller 400, the first roller 300 is rotatably connected to the bearing base 100, the second roller 400 is rotatably connected to the bearing base 100, the arc bearing 200 is configured to support the main beam 2000 of the photovoltaic tracking support, the first roller 300 is configured to roll and abut an arcuate outer sidewall 221 of the arc bearing 200, and the second roller 400 is configured to roll and abut an arcuate inner sidewall 222 of the arc bearing 200 to rotate the arc bearing 200 relative to the bearing base 100.

Since both the first roller 300 and the second roller 400 are capable of limiting the motion of the bearing base 100, typically under gravity, the photovoltaic tracking support is supported on the first roller 300 at the arcuate outer sidewall 221 of the bearing base 100 through the arc bearing 200. During strong winds, the rotating portion of the photovoltaic tracking support generates an upward or downward deflection trend. In this case, the arc bearing 200 is abutted and limited by the second roller 400 at the arcuate inner sidewall 222, which prevents upward deflection, or the arc bearing 200 is abutted and limited by the first roller 300 at the arcuate outer sidewall 221, which prevents downward deflection, such that the photovoltaic tracking support is always on the set motion trajectory, thereby maintaining the normal motion of the main beam 2000 on the set motion trajectory and ensuring the normal operation of the photovoltaic tracking support in tracking azimuth changes of the sun.

The support structure 1000 adopts arc bearings in combination with a multi-point support manner, and addresses the elimination of the eccentric moment of the rotating portion of the photovoltaic tracking support and the effect of the eccentricity of the main beam 2000 on the torque transmission. The configuration ensures flexible rotation of the photovoltaic tracking support during slow tracking operation, and effectively suppresses torsional oscillation of the photovoltaic tracking support under strong winds, thereby fundamentally eliminating torsional resonance damage caused by strong winds and ensuring the operation of the tracking bracket safer and more reliable.

Meanwhile, the support structure 1000 has strong resistance to oscillation and is capable of fundamentally eliminating torsional resonance damage of the photovoltaic tracking support; the bearing arc of the support structure 1000 rotates smoothly and is capable of withstanding relatively strong uplift force and has strong load carrying capacity; the support structure 1000 is supported by two roller groups, with a relatively large spacing between the two support points, making the support smoother and more reliable; the support structure 1000 is capable of effectively reducing the eccentric torque of the rotating portion of the photovoltaic tracking support, which is conducive to driving balance; and the support structure 1000 has a simple structure and has high degree of factory integration, making it easy to mount on site.

The photovoltaic tracking support includes the main beam 2000 and the support structure 1000 described above. The arc bearings 200 of the plurality of support structures 1000 are mounted at intervals along the length direction of the main beam 2000, and the photovoltaic tracking support has all the functions of the support structure 1000 described above.

The above description is merely the various detailed embodiments of the present invention. However, the protection scope of the present invention is not limited thereto, and any modifications and substitutions that can be easily conceived by those skilled in the art within the technical scope disclosed by the present invention shall fall within the protection scope of the present invention. Therefore, the protection scope of the present invention shall be subject to the protection scope of the claims.

### INDUSTRIAL APPLICABILITY

In summary, the present invention provides a support structure and a photovoltaic tracking support that are capable of maintaining the normal motion of the main beam on the set motion trajectory to ensure the normal operation of the photovoltaic tracking support in tracking azimuth changes of the sun. The support structure adopts arc bearings in combination with a multi-point support manner, and addresses the elimination of the eccentric moment of the rotating portion of the photovoltaic tracking support and the effect of the eccentricity of the main beam on the torque transmission. The configuration ensures flexible rotation of the photovoltaic tracking support during slow tracking operation, and effectively suppresses torsional oscillation of the photovoltaic tracking support under strong winds, thereby fundamentally eliminating torsional resonance damage caused by strong winds and ensuring the operation of the tracking bracket safer and more reliable. The support structure has strong resistance to oscillation and is capable of fundamentally eliminating torsional resonance damage of the photovoltaic tracking support; the bearing arc of the support structure rotates smoothly and is capable of withstanding relatively strong uplift force and has strong load carrying capacity; the support structure is supported by two roller groups, with a relatively large spacing between the two support points, making the support smoother and more reliable; the support structure is capable of effectively reducing the eccentric torque of the rotating portion of the photovoltaic tracking support, which is conducive to driving balance; and the support structure has a simple structure and has high degree of factory integration, making it easy to mount on site. The photovoltaic tracking support is also capable of effectively reducing the eccentric torque of the rotating portion of the photovoltaic tracking support.

## Claims

1. A support structure, **characterized by** comprising:
a bearing base (100);
a first roller (300), wherein the first roller (300) is rotatably connected to the bearing base (100);
a second roller (400), wherein the second roller (400) is rotatably connected to the bearing base (100); and
an arc bearing (200), wherein the arc bearing (200) is configured to support a main beam (2000) of a photovoltaic tracking support, the first roller (300) is configured to roll and abut an arcuate outer sidewall (221) of the arc bearing (200), and the second roller (400) is configured to roll and abut an arcuate inner sidewall (222) of the arc bearing (200), so that the arc bearing (200) rotates relative to the bearing base (100).

2. The support structure according to claim 1, wherein the arc bearing (200) comprises a support plate (210) and an arc plate (220), the arc plate (220) has the arcuate inner sidewall (222) and the arcuate outer sidewall (221), the support plate (210) is connected to the arcuate inner sidewall (222), and the support plate (210) is configured to support the main beam (2000) of the photovoltaic tracking support.

3. The support structure according to claim 2, wherein the support plate (210) is provided with a limiting groove (211), and the limiting groove (211) is configured to support the main beam.

4. The support structure according to claim 2 or claim 3, wherein the arc plate (220) has a semi-circular arc shape.

5. The support structure according to any one of claims 1-4, wherein a portion of the wall of the arcuate outer sidewall (221) is recessed toward the arcuate inner sidewall (222) to form and provide a roller guide groove (223), and the first roller (300) is configured to roll and abut the roller guide groove (223).

6. The support structure according to claim 5, wherein the roller guide groove (223) extends along a peripheral edge of the arc plate (220).

7. The support structure according to any one of claims 1-6, wherein an axis of rotation of the first roller (300) is parallel to an axis of rotation of the second roller (400).

8. The support structure according to any one of claims 1-7, wherein the axis of rotation of the first roller (300) is parallel to an axis of rotation of the arc bearing (200).

9. The support structure according to any one of claims 3-8, wherein a plurality of roller guide grooves (223) and a plurality of first rollers (300) are provided, the plurality of roller guide grooves (223) are distributed in parallel, and at least one of the first rollers (300) is configured to roll and abut one of the roller guide grooves (223).

10. The support structure according to claim 9, wherein the bearing base (100) comprises a connecting plate (110), a first plate body (120), a second plate body (130), and a through shaft (140), the first plate body (120) and the second plate body (130) are disposed at intervals on the connecting plate (110), and the through shaft (140) passes through the first plate body (120) and the second plate body (130) simultaneously, wherein
the plurality of first rollers (300) rotate about the same through shaft (140).

11. The support structure according to claim 10, wherein the bearing base (100) further comprises a cantilever shaft (150), the cantilever shaft (150) is connected to the first plate body (120), and the second roller (400) is rotatably connected to the cantilever shaft (150).

12. The support structure according to any one of claims 1-11, wherein the support structure further comprises a limiting member (500), the limiting member (500) is connected to the arc bearing (200), and the limiting member (500) is configured to abut the second roller (400) when the arc bearing (200) is rotated to an extreme position.

13. The support structure according to any one of claims 1-12, wherein the support structure comprises a plurality of sets of roller groups, and the plurality of sets of roller groups are respectively located at a plurality of support positions distributed at intervals on the arc bearing (200), wherein
a plurality of first rollers (300) and a plurality of second rollers (400) are provided, and one of the first rollers (300) and one of the second rollers (400) located at the same support position of the arc bearing (200) constitute one roller group.

14. The support structure according to claim 13, wherein the support structure comprises two sets of roller groups.

15. The support structure according to claim 14, wherein each set of the roller groups comprises two first rollers (300), and the two first rollers (300) share an axis of rotation; and each set of the roller groups further comprises two second rollers (400), and the two second rollers (400) are located on opposite sides of the support plate (210), respectively.

16. The support structure according to claim 13, wherein one roller guide groove (223) is provided, and one set of roller groups only comprises one first roller (300) and two second rollers (400).

17. The support structure according to any one of claim 2-16, wherein a length of the support plate (210) in a direction of the axis of rotation of the arc bearing (200) is less than a length of the arc plate (220) in the direction of the axis of rotation of the arc bearing (200), and edges of the arc plate (220) protrude toward two sides of the support plate (210).

18. A photovoltaic tracking support, **characterized by** comprising a main beam (2000) and a plurality of support structures according to any one of claims 1-17, wherein the arc bearings (200) of the plurality of support structures are mounted at intervals along a length direction of the main beam (2000).

19. The photovoltaic tracking support according to claim 18, wherein a center point (201) of the arc bearing (200) is disposed between an upper end face (2001) or a highest point (2003) of the main beam (2000) and a center (2002) of the main beam (2000), and the center point (201) of the arc bearing (200) is located on a centerline (2010) in a vertical direction of the main beam (2000).

20. The photovoltaic tracking support according to claim 18 or claim 19, wherein the photovoltaic tracking support is a flat single-axis tracking support.
